# EUROPEAN PATENT APPLICATION

(11) **EP 2 549 579 A1**
(43) Date of publication of application: **23.01.2013**
(21) Application number: 12158558.2
(22) Date of filing: 08.03.2012
(51) Int. Cl.: H01M 10/44

(54) **Battery system**

(30) Priority: 19.07.2011 JP 2011158466
(71) Applicant: Hitachi, Ltd., Chiyoda-ku Tokyo 100-8280 (JP)
(72) Inventor: IWASAWA, Hiroshi, Tokyo, 100-8220 (JP); HONDA, Mitsutoshi, Tokyo, 100-8220 (JP)
(74) Representative: MERH-IP Matias Erny Reichl Hoffmann

(57) **Abstract**

A battery system (11) having a battery string (13) connecting in series a plurality of battery units (15) includes: an SOC detection unit (19) for individually detecting states of charge of the plurality of battery units (15; 36, 37; 38, 39); and a charge-and-discharge control unit (27) for individually charging and discharging the battery units (15), based on a full charge capacity of each battery unit (15a, 15b,..., 15n; 36, 37; 38, 39) and each state of charge of the battery units (15) individually detected by the detection unit (19), upon the battery system (11) being in no load state, the control unit (27) individually charges and discharges the battery units (15) so that the states of charge are approximately equal when the battery units (15) are in a discharge end state and so that a difference between the states of charge is large when the battery units (15) are approximately in a full charge state.

## Description

### BACKGROUND OF THE INVENTION

### 1. FIELD OF THE INVENTION

The present invention relates to a battery system comprising a battery string configured by connecting in series a plurality of battery units configuring with at least one of a battery cell and a battery module, and in particular, relates to a charge-and-discharge control technology of an SOC (State of Charge) balancing technology between the plurality of battery units.

### 2. DESCRIPTION OF THE RELATED ART

Recently, a power generation technology utilizing a natural energy (regenerative energy) such as wind power and sunlight attracts an attention. Furthermore, also a technology called a smart grid, which exploits an IT (Information Technology) and efficiently makes use of a power system connecting a power plant and a customer, for example, like a mesh, attracts an attention as a technology of taking charge of stabilizing the power system.

In the power system, there is a fear that a system trouble occurs, for example, by unbalance of demand and supply. For the purpose of hedging an outage due to the occurrence of such a system trouble, a battery system having a battery string configured by connecting in series battery cells or battery modules such as a lithium-ion battery is used. In some cases the battery system can output a mega-watt class of power by combining a plurality of battery strings.

According to the battery system thus described, for example, in some cases a fluctuation of charge states occurs between a plurality of cells connected in series as a component of a battery module. In these cases, if the battery module is charged and discharged, a same current flows in the plurality of cells as a current route. Therefore, not only the fluctuation of the charge states between the plurality of cells is maintained as it is, but also there is a fear that a fluctuation amount is expanded on and on.

In order to eliminate a problem of the fluctuation of the charge states between the plurality of cells thus described, conventionally, an addressing method of using a state of charge (hereinafter abbreviated as "SOC" meaning singularity or plurality as needed). The SOC indicates the charge state of a battery unit and is an index: where a full charge capacity of a battery unit is assumed to be a denominator, and a remaining electric charge to be a numerator, and is expressed in percentage. The SOC of a battery unit in a full charge state is 100 %, and that of the battery unit in a full discharge state (vacant state) is 0 %.

For example, it is proposed a technology of setting a reference value for determining whether or not to eliminate the fluctuation amount between a plurality of cells based on the SOC of a battery module where the plurality of cells are connected in series, and equalizing the SOC between the plurality of cells at a timing when the SOC of a cell matches the reference value (see Japanese Patent Laid-Open Publication No. 2009-071936). According to the technology of the Japanese Patent Laid-Open Publication No. 2009-071936, it is possible to properly perform SOC balancing between a plurality of cells.

Incidentally, recently, a development and experimental introduction of a battery system for a power storage are progressing. Herein, there have occurred in the battery system various requests of a voltage capacity and a current capacity. For example, also such an embodiment of building battery units, whose capacities are different with each other, in one battery string is assumed. Furthermore, in an actual battery string full charge capacities between a plurality of battery units are unbalance due to a manufacturing fluctuation and deterioration fluctuation of the battery units. With respect to the embodiment of the battery system thus described, there is a problem of how to perform a charge-and-discharge control relating to SOC balancing between the plurality of battery units in the battery string where the battery units, whose capacities are different with each other, are built in.

Here will be described this problem. Firstly, prepare a battery string where battery units, whose capacities are different with each other, large and small, are built in. These battery units are different with each other in full charge capacity. Assume that a charge-and-discharge control relating to the SOC balancing between a plurality of battery units whose capacities are thus different with each other is performed at a timing when an SOC value of a cell matches a reference value of the SOC value, using the technology of the Japanese Patent Laid-Open Publication No. 2009-071936.

According to the conventional technology of the Japanese Patent Laid-Open Publication No. 2009-071936, although a main purpose of eliminating an unbalance between the plurality of cells is achieved, there is an aspect to be improved in extending an operating life of the battery system to be longer.

Thinking of the SOC in a battery string consisting of battery units having a fluctuation in charge-and-discharge capacity, the SOC of a battery unit of a small capacity rapidly increases, and whereas, that of a battery unit of a large capacity gradually changes; thus, a speed difference occurs in a change of the SOC between the battery units whose capacities are large and small, respectively. This is because, with respect to the SOC of the battery unit having a small capacity and that of the battery unit having a large capacity, in spite of a change amount of a numerator (remaining electric charge of each battery unit) per unit time being same, a denominator (full charge capacity of each battery unit) is different.

Generally, a lithium-ion battery has a property of extending its life by being used in a low SOC. Considering an influence of a life of a battery system according to the property, according to the Japanese Patent Laid-Open Publication No. 2009-071936, for example, when an SOC of approximately a full charge capacity is used as an SOC balancing reference, an average SOC of a battery unit having a large capacity is higher than that of a battery unit having a small capacity; thus, this case is a disadvantageous condition in extending a life thereof to be longer.

In order to solve the problem, it suffices to set the balancing reference SOC low. But according to the Japanese Patent Laid-Open Publication No. 2009-071936, as aforementioned, in order to determine a required balancing amount, it is necessary that the average SOC in the battery string matches the balancing reference SOC. Therefore, with respect to an application where a frequency of being used as far as the low SOC is few, there is a problem that a determination of the required balancing amount cannot be rarely performed.

### SUMMARY OF THE INVENTION

The present invention is made in view of the above actual situation and is intended to properly perform a charge-and-discharge control relating to SOC balancing between a plurality of battery units even when battery units, whose capacities are different with each other, are built in a battery string.

A battery system of the invention includes a battery string configured by connecting in series a plurality of battery units configuring at least one of a battery cell and a battery module and is characterized by comprising: a SOC (state of charge) detection unit configured to individually detect states of charge of the plurality of battery units; and/or a charge-and-discharge control unit configured to individually charge and discharge the plurality of battery units, based on a full charge capacity of each of the plurality of battery units and each of the states of charge of the plurality of battery units individually detected by the SOC detection unit.

According to the configuration, by performing the charge-and-discharge control, the battery system makes, upon the battery system being in no load state, the charge-and-discharge control unit perform to individually charge and discharge the plurality of battery units so that the states of charge of the plurality of battery units are approximately equal with each other when the plurality of battery units are in a discharge end state and so that a difference between the states of charge of the plurality of battery units is relatively large when the plurality of battery units are approximately in a full charge state.

Generally, a voltage of a battery in no load state and the SOC are in a relationship of a monotonous increase. Therefore, when a charge-and-discharge control is performed in no load state, each voltage of a plurality of battery units is approximately equal when the plurality of battery units are near a discharge completion state, and each voltage of the plurality of battery units is relatively large when the plurality of battery units are near a full charge state.

The battery system of the invention also makes it a most main feature the above mentioned feature appearing in the voltage of each of the plurality of battery units throughout the charge-and-discharge control.

### BRIEF DESCRIPTION OF THE DRAWINGS

FIG. 1 is a functional block diagram showing an outline of a battery system of an embodiment of the present invention.
FIG. 2 is a circuit configuration diagram around a charge-and-discharge circuit of the battery system of the embodiment.
FIG. 3 is a flowchart showing an operation of a charge-and-discharge control relating to SOC balancing between a plurality of battery units.
FIGS. 4A and 4B are time charts showing an operation example of a charge-and-discharge control relating to SOC balancing between a plurality of battery units whose capacities are same.
FIGS. 5A, 5B, and 5C are time charts showing an operation example of a charge-and-discharge control relating to SOC balancing between a plurality of battery units whose capacities are different with each other.
FIGS. 6A and 6B are drawings where remaining electric charges are compared before and after the charge-and-discharge control relating to SOC balancing between a plurality of battery units whose capacities are different with each other.

### PREFERRED EMBODIMENT(S) FOR CARRYING OUT THE INVENTION

Hereinafter will be described a battery system 11 of an embodiment of the present invention in detail with reference to drawings.

### [Outline of Battery System]

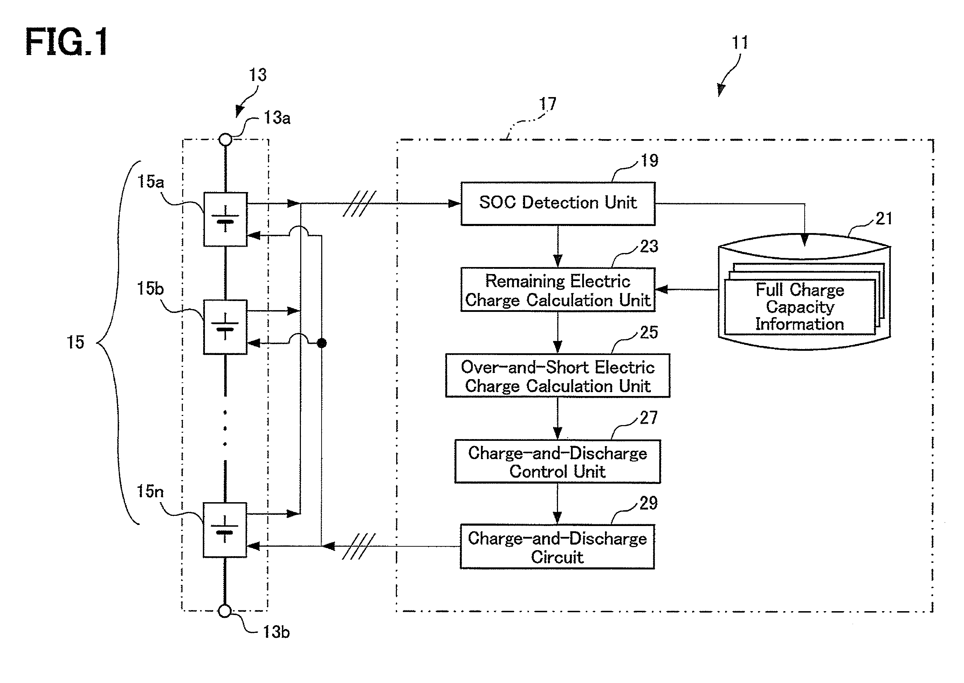

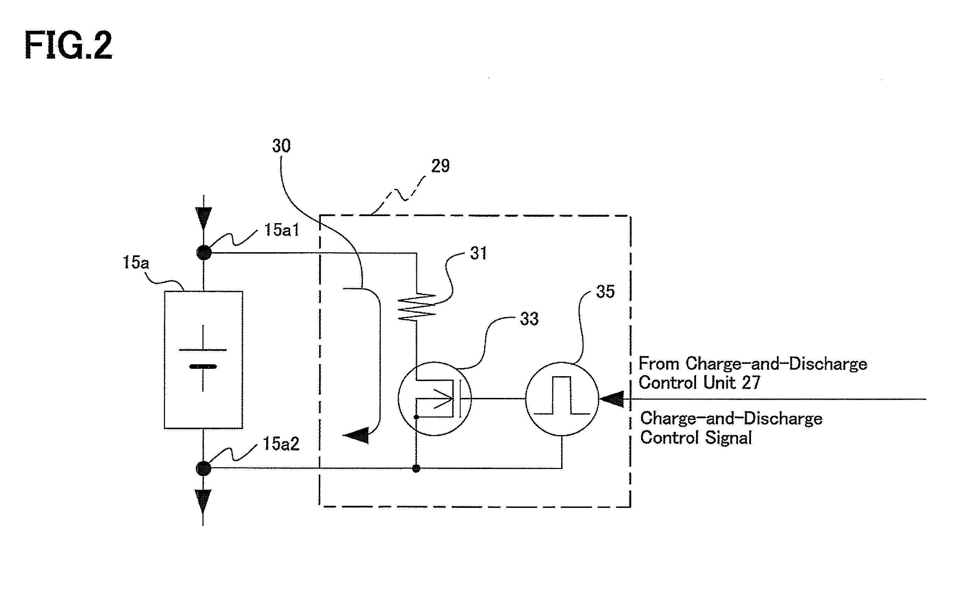

FIG. 1 is a functional block diagram showing an outline of the battery system 11 of the embodiment. FIG. 2 is a circuit configuration diagram around a charge-and-discharge circuit 29 of the battery system 11. As shown in FIG. 1, the battery system 11 comprises a battery string 13 and a battery controller 17. The battery string 13 is configured by connecting plurally in series battery units 15a, 15b, ..., 15n between a pair of direct-current terminals 13a, 13b, wherein a battery cell of a lithium-ion secondary battery comprises the units 15a, 15b, ..., 15n.

The battery controller 17 comprises an SOC detection unit 19, a full charge capacity information memory unit 21, a remaining electric charge calculation unit 23, an over-and-short electric charge calculation unit 25, a charge-and-discharge control unit 27, and a charge-and-discharge circuit 29. The SOC detection unit 19 has a function of individually detecting each SOC (State of Charge) of the plurality of battery units 15a, 15b, ..., 15n (hereinafter in some cases the symbols "15a, 15b, ..., 15n" of the plurality of battery units15a, 15b, ..., 15n will be collectively called a symbol "15" as shown in FIG. 1).

Practically, the SOC detection unit 19 detects voltages between terminals of the plurality of battery units, respectively, and detects each SOC of the battery units 15a, 15b, ..., 15n, based on the detected voltages between the terminals of each of the plurality of battery units15a, 15b, ..., 15n. Moreover, the SOC detection unit 19 diagnoses overcharge and overdischarge of the plurality of battery units15a, 15b, ..., 15n.

The full charge capacity information memory unit 21 memorizes full charge capacity information of respective full charge capacities of the plurality of battery units 15a, 15b, ..., 15n. The full charge capacity information changes, depending on a deterioration based on continual use of the plurality of battery units 15. The full charge capacity information of respective full charge capacities of the plurality of battery units 15a, 15b, ..., 15n is adapted to be timely updated so as to reflect the change.

The remaining electric charge calculation unit 23 has a function of individually calculating remaining electric charges Qrd of the plurality of battery units 15a, 15b, ..., 15n, based on full charge capacity information of full charge capacities Qfl of the plurality of battery units 15a, 15b, ..., 15n acquired from the full charge capacity information memory unit 21 and each SOC of the plurality of battery units 15a, 15b, ..., 15n individually detected by the SOC detection unit 19 (Qrd= Qfl*SOC). Furthermore, the remaining electric charge calculation unit 23 has a function of calculating an average Qav, based on the remaining electric charges Qrd and number n of the plurality of battery units 15a, 15b, ..., 15n (Qav=Σ Qrd/n).

The over-and-short electric charge calculation unit 25 determines whether or not a difference of the remaining electric charges Qrd between the plurality of battery units 15a, 15b, ..., 15n converges within a predetermined range (range appropriately set and changeable), based on the charges Qrd of the plurality of battery units 15 individually calculated by the remaining electric charge calculation unit 23 and the average Qav of the charges Qrd; as a result of the determination, when the difference of the remaining electric charges Qrd between the plurality of battery units 15 does not converge within the predetermined range with respect to a target value, the unit 25 has a function of individually calculating any ones of over electric charges and short electric charges of the plurality of battery units 15.

The charge-and-discharge control unit 27 has a function of making the charge-and-discharge circuit 29 individually charge and discharge the plurality of battery units 15a, 15b, ..., 15n according to any ones of the over electric charges and short electric charges individually calculated by the over-and-short electric charge calculation unit 25.

The charge-and-discharge circuit 29 comprises, as shown in FIG. 2, a resistance 31, a MOSFET (Metal Oxide Semiconductor Field Effect Transistor) 33, and a charge-and-discharge control-signal input unit 35. The charge-and-discharge circuit 29 is provided one to one to each battery unit as shown in FIG. 1 so as to connect a pair of terminals arranged to sandwich a battery unit (a pair of terminals 15a1, 15a2 in an example of FIG. 2).

In the example of FIG. 2 is formed a current detour route 30 to which the resistance 31 and the MOSFET 33 are connected in series so as to connect the pair of terminals 15a1, 15a2 of the battery unit 15a. The MOSFET 33 functions so as to control opening and closing the current detour route 30 according to a charge-and-discharge control signal sent from the charge-and-discharge control unit 27 and input in the charge-and-discharge control-signal input unit 35. Thus the charge-and-discharge circuit 29 is adapted to lead a part of current, which attempts to flow into the battery unit 15a, to the current detour route 30, and thereby to be able to adjust a largeness of a charging current flowing into the unit 15a.

Specifically, with respect to the battery unit 15a, when making the MOSFET 33 thereof ON and MOSFETs 33 of the battery units 15 other than the unit 15a OFF, only the unit 15a is more discharged than the battery units 15 other than the unit 15a, and it is possible to reduce the SOC of the unit 15a. Furthermore, with respect to the battery unit 15a, contrary to the above, when making the MOSFET 33 thereof OFF and MOSFETs 33 of the battery units 15 other than the unit 15a ON, discharge of the unit 15a is more reduced than those of the battery units 15 other than the unit 15a and is relatively charged, and it is possible to increase the SOC of the unit 15a.

### [ Operations of Battery System According to Flowchart]

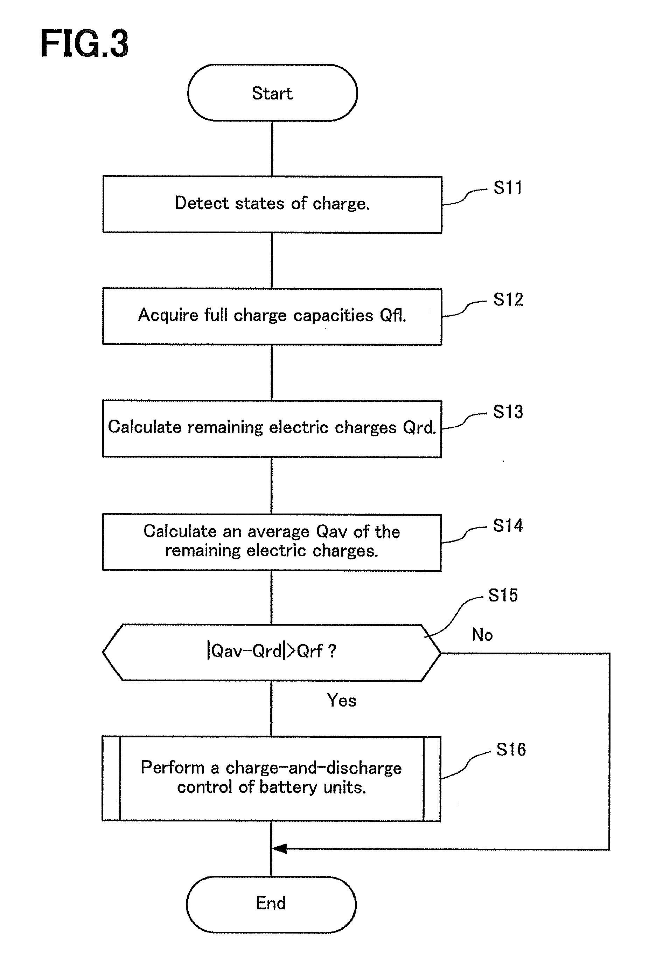

Next will be described an operation of the battery system 11 of the embodiment with reference to FIG. 3. FIG. 3 is a flowchart showing operations of a charge-and-discharge control relating to SOC balancing between the plurality of battery units 15a, 15b, ..., 15n. A flow of operations shown in FIG. 3 is performed simultaneously and in parallel to a charge-and-discharge operation of the battery string 13.

In a step S11 shown in FIG. 3, the SOC detection unit 19 detects the SOC of the plurality of battery units 15a, 15b, ..., 15n, respectively.

In a step S12 shown in FIG. 3, the remaining electric charge calculation unit 23 acquires full charge capacity information of the respective full charge capacities Qfl of the plurality of battery units 15 from the full charge capacity information memory unit 21.

In a step S13 shown in FIG. 3, the remaining electric charge calculation unit 23 individually calculates the remaining electric charges Qrd of the plurality of battery units 15a, 15b, ..., 15n, based on the full charge capacity information of the full charge capacities Qfl of the plurality of battery units 15a, 15b, ..., 15n acquired in the step S12 shown in FIG. 3 and each SOC of the units 15a, 15b, ..., 15n individually detected in the step S11 shown in FIG. 3. Specifically, the remaining electric charge calculation unit 23 individually obtains the remaining electric charges Qrd of the plurality of battery units 15a, 15b, ..., 15n by performing a calculation of multiplying the full charge capacities Qfl by each corresponding SOC.

In a step S14 shown in FIG. 3, the remaining electric charge calculation unit 23 obtains the average Qav, based on the remaining electric charges Qrd and number n of the plurality of battery units 15a, 15b, ..., 15n obtained in the step S13.

In a step S15 shown in FIG. 3, the over-and-short electric charge calculation unit 25 investigates whether or not a difference of the average Qav and each remaining electric charge Qrd of the plurality of battery units 15a, 15b, ..., 15n converges within a predetermined range with respect to a target value (Qrf described later) based on the charges Qrd of the plurality of battery units 15 obtained in the step S13 and the average Qav of the charges Qrd obtained in the step S14; thereby, the unit 25 determines whether it is necessary or not to perform a charge-and-discharge control relating to SOC balancing between the plurality of battery units 15a, 15b, ..., 15n.

Specifically, the over-and-short electric charge calculation unit 25 compares a largeness-and-smallness relationship between an absolute value "|Qav-Qrd|" of the difference, where each of the remaining electric charges Qrd is subtracted from the average Qav thereof, and a predetermined tolerance Qrf (appropriately set and changeable value) of the difference; in other words, the unit 25 investigates what extent each of the charges Qrd is deviated in its distribution from the average Qav of the charges Qrd; and thereby, the unit 25 determines whether it is necessary or not to perform the charge-and-discharge control relating to the SOC balancing between the plurality of battery units 15a, 15b, ..., 15n.

As a result of the determination of the step S15 shown in FIG. 3, when it is determined that the absolute value "|Qav-Qrd|" of the difference is equal to or less than the predetermined tolerance Qrf (unnecessary to perform the charge-and-discharge control relating to the SOC balancing between the plurality of battery units 15a, 15b, ..., 15n) ("No" in the step S15), the battery controller 17 completes the flow of a series of the operations.

On the other hand, as a result of the determination of the step S15 shown in FIG. 3, when it is determined that the absolute value "|Qav-Qrd|" of the displacement value exceeds the predetermined tolerance Qrf (necessary to perform the charge-and-discharge control relating to the SOC balancing between the plurality of battery units 15a, 15b, ..., 15n) ("Yes" in the step S15), the charge-and-discharge control unit 27 makes, in a step S16, the charge-and-discharge circuit 29 individually perform the charge-and-discharge control relating to charge and discharge of the plurality of battery units 15a, 15b, ..., 15n.

In addition, the charge-and-discharge control is performed to all of the plurality of battery units 15a, 15b, ..., 15n when at least one or more than one battery unit out of the plurality of battery units 15a, 15b, ..., 15n is determined to be "Yes" as the result of the determination in the step S15. However, instead of performing the charge-and-discharge control to all of the plurality of battery units 15a, 15b, ..., 15n, the charge-and-discharge control may be restricted to any battery unit for which "Yes" is determined in the step S15 and perform the charge-and-discharge control thereto.

### [Operations of Battery System According to Time Charts]

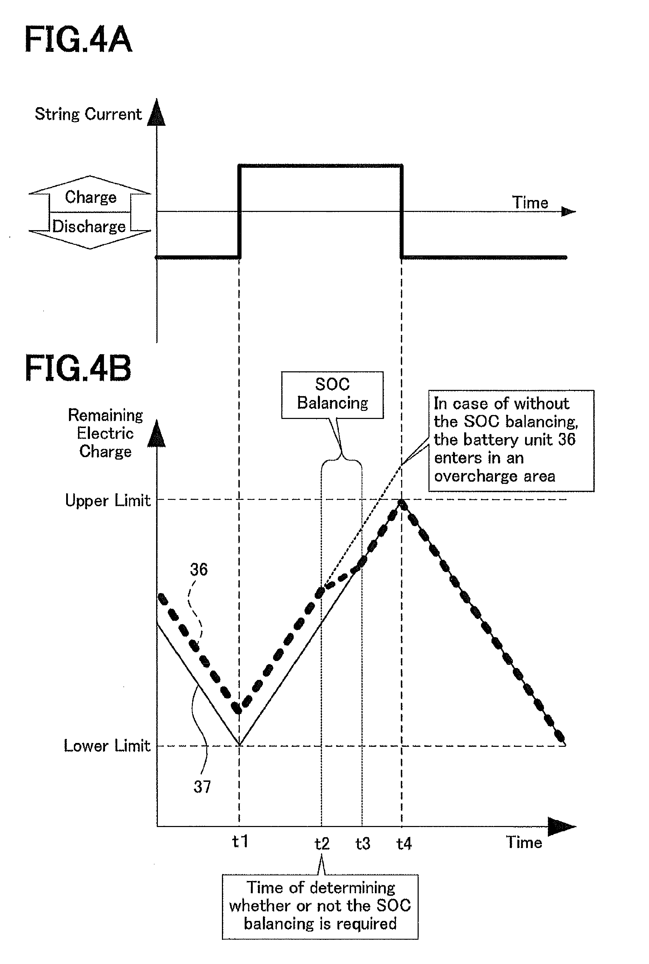

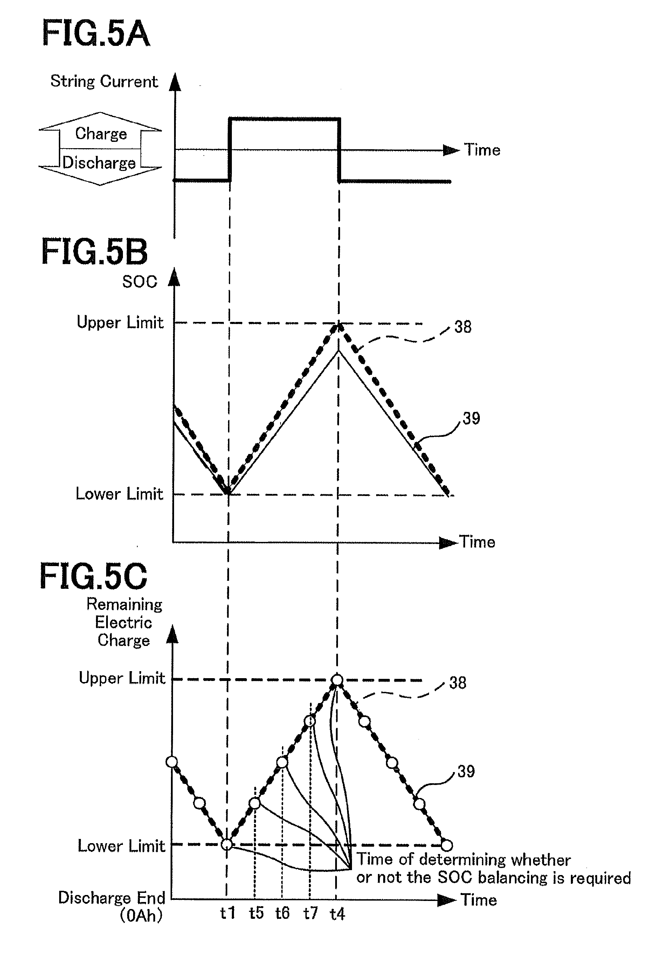

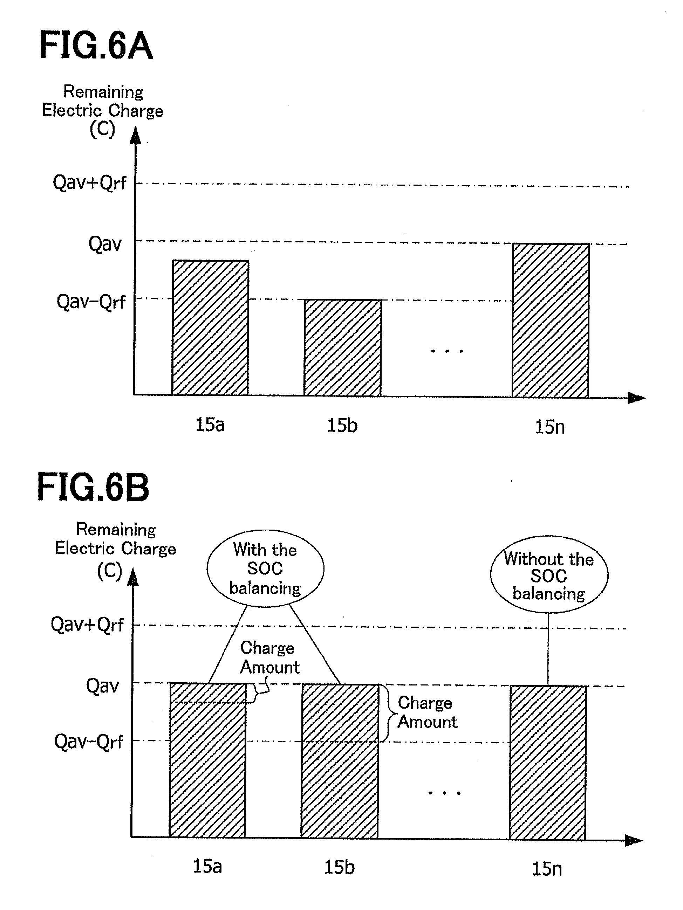

Next will be described the operations of the battery system 11 of the embodiment with reference to FIGS. 4A to 6B. FIGS. 4A and 4B are time charts showing an operation example of a charge-and-discharge control relating to SOC balancing between a pair of battery units 36, 37 whose capacities are same. FIGS. 5A, 5B, and 5C are time charts showing an operation example of a charge-and-discharge control relating to SOC balancing between a pair of battery units 38, 39 whose capacities are different with each other. FIGS. 6A and 6B are drawings where battery capacities (remaining electric charges) are compared before and after a charge-and-discharge control relating to SOC balancing between the plurality of battery units 15a, 15b, ..., 15n whose capacities are different with each other.

### <Charge-and-discharge Control Operations Of SOC Balancing Between Battery Units Whose Capacities are Same>

With respect to a charge-and-discharge operation of the battery string 13 of the embodiment, for example as shown in FIG. 4A, charge-and-discharge are periodically and repeatedly performed. FIG. 4B shows an example where a charge-and-discharge control is performed simultaneously and in parallel to the charge-and-discharge operation of the battery string 13 within a range defined by a lower limit and upper limit of the remaining electric charge Qrd of the SOC balancing between the pair of battery units 36, 37 whose capacities are same.

With respect to the example of FIG. 4B, during the charging operation of the battery string 13 at zones of times t1 to t4, and at the zones of the times t2 to t3 whose starting point is a timing (timing (for example, the average Qav of the remaining electric charges Qrd) when a deviation of the remaining electric charge Qrd from a target value deviates from a predetermined range) of the time t2 included in the times t1 to t4, the charge-and-discharge control relating to the SOC balancing is performed so as to superimpose a trajectory of the remaining electric charges Qrd of the one battery unit 36 on that of the remaining electric charges Qrd of the other battery unit 37.

Here, it is assumed that such a charge-and-discharge control relating to the SOC balancing between the pair of the battery units 36, 37 shown in FIG. 4B is not performed. In this case an orbit is not corrected so that the trajectory of the remaining electric charges Qrd (unit: C) of the one battery unit 36 is superimposed on that of the remaining electric charges Qrd of the other battery unit 37. Therefore, at the time t4, the trajectory of the remaining electric charges Qrd of the one battery unit 36 enters in an overcharge area where the trajectory exceeds the upper limit of the remaining electric charge. Whereat, for example, in a case where such a configuration of the battery controller 17 that forcibly stops the charge-and-discharge operation of the battery string 13 is adopted when the remaining electric charge Qrd of the battery unit 36 enters in the overcharge area, the charge-and-discharge operation of the battery string 13 is forcibly stopped. In this case, it is not possible to properly perform the charge-and-discharge operation of the battery string 13.

Accordingly, when performing the charge-and-discharge operation to the SOC balancing between pair of battery units 36, 37, it is proved that it is possible to eliminate a matter of being unable to properly perform the charge-and-discharge operation of the battery string 13.

### <Charge-and-Discharge Control Operations Of SOC Balancing Between Battery Units Whose Capacities are Different with Each Other>

On the other hand, with respect to the charge-and-discharge operation of the battery string 13 of the embodiment, as shown in FIG. 5A same as in FIG. 4A, charge and discharge are periodically and repeatedly performed. FIG. 5B shows an example where a charge-and-discharge control relating to the SOC balancing between the battery units 38, 39, whose capacities are large and small and different with each other, is performed simultaneously and in parallel to the charge-and-discharge operation of the battery string 13 within a range defined by a lower limit and upper limit of the SOC.

The SOC of a vertical axis in FIG. 5B is an index where a full charge capacity of a battery unit is assumed to be a denominator and a remaining electric charge thereof to be a numerator, and each SOC of the battery units 38, 39 is expressed in percentage. As shown in FIG. 5B, the SOC of the battery unit 38 of the small capacity is proved to dynamically change within a range defined by a lower limit and upper limit of the SOC in comparison with that of the battery unit 39 of the large capacity. This is based on a fact that: with respect to the SOC of the battery unit 38 of the small capacity and that of the battery unit 39 of the large capacity, although each change amount per unit time of each numerator (remaining electric charge) is same (because a common charge-and-discharge current flows in the battery units 38, 39 existing in the common string 13), each denominator (full charge capacity) is different.

Furthermore, FIG. 5C shows an example where a charge-and-discharge control is performed simultaneously and in parallel to the charge-and-discharge operation of the battery string 13 within a range defined by a lower limit and upper limit of the remaining electric charges Qrd of the SOC balancing between the pair of battery units 38, 39 whose capacities are different with each other. With respect to the example of FIG. 5C, during the charging operation of the battery string 13 at zones of times t1 to t4, and at each of times t5, t6, and t7 (times appropriately set and changeable) included in the zones of times t1 to t4, a charge-and-discharge control relating to the SOC balancing is performed so as to superimpose a trajectory of the remaining electric charges Qrd of the one battery unit 38 on that of the remaining electric charges Qrd of the other battery unit 39.

According to the charge-and-discharge controls of the SOC balancing thus described, the remaining electric charges Qrd of the plurality of battery units 15a, 15b, ..., 15n before the SOC balancing are adjusted so as to match the average Qav of the remaining electric charges Qrd as compared in FIGS. 6A and 6B.

### [Action and Effect of Battery System]

According to the battery system 11 of the embodiment, the SOC detection unit 19 individually detects the SOC of the plurality of battery units 15a, 15b, ..., 15n. The remaining electric charge calculation unit 23 individually calculates the remaining electric charges Qrd of the plurality of battery units 15a, 15b, ..., 15n, based on the full charge capacity information of the full charge capacities Qfl of the plurality of battery units 15a, 15b, ..., 15n acquired from the full charge capacity information memory unit 21, and the SOC of the plurality of battery units 15a, 15b, ..., 15n individually detected by the SOC detection unit 19. The charge-and-discharge control unit 27 makes the plurality of battery units 15a, 15b, ..., 15n individually perform charging and discharging, based on the remaining electric charges Qrd of the plurality of battery units 15a, 15b, ..., 15n individually calculated by the remaining-electric-charge calculation unit 23.

According to the battery system 11 of the embodiment, because the plurality of battery units 15 are individually charged and discharged, based on the remaining electric charges Qrd (unit: C) of the battery units 15, even when the battery units 38, 39 whose capacities are different with each other are built in the battery string 13, it is possible to properly perform the charge-and-discharge control relating to the SOC balancing between the plurality of battery units 15.

Furthermore, according to the battery system 11 of the embodiment, charges of any of an excess and shortage of the plurality of battery units 15 are individually calculated so that a difference of the remaining electric charges Qrd between the plurality of battery units 15 converges within a predetermined range with respect to a target value, and according to the charges of the excess and the shortage thus obtained, the plurality of battery units 15 are individually charged and discharged; therefore, it is possible to accurately and properly perform the charge-and-discharge control relating to the SOC balancing between the plurality of battery units 15 with respect to the target value.

According to the battery system 11 of the embodiment, out of the plurality of battery units 15, a battery unit whose charge is short is charged and whereas a battery unit whose charge is excessive is discharged; therefore, it is possible to properly perform the charge-and-discharge control relating to the SOC balancing between the plurality of battery units 15 by a realistic practicable means.

Furthermore, according to the battery system 11 of the embodiment, the over-and-short electric charge calculation unit 25 individually calculates each charge of the excess and shortage of the plurality of battery units 15 so that the difference of the remaining electric charges Qrd between the plurality of battery units 15 is approximately zero; therefore, even when the battery units 38, 39 whose capacities are different with each other are built in the battery string 13, it is possible to precisely perform the charge-and-discharge control relating to the SOC balancing between the plurality of battery units 15.

### [Other Embodiments]

The embodiment thus described shows the examples of a realization of the present invention. Therefore, according to these, the technical spirit and scope of the invention should not be restrictively construed.

For example, with respect to the embodiment, a battery cell has been exemplified and described as the battery units 15a, 15b, ..., 15n of the invention. The invention is not limited thereto. A battery module where a plurality of battery cells are combined in any of series and parallel (including a combination of series and parallel) may also be used as the battery units 15a, 15b, ..., 15n of the invention.

Furthermore, although the charge-and-discharge circuit 29 has been exemplified and described for adjusting the charging current with respect to the plurality of battery units 15a, 15b, ..., 15n, the invention is not limited thereto. A configuration of the charge-and-discharge circuit 29 for adjusting a discharging current may also be adopted by connecting a load such as a resistance between the pair of terminals 15a1, 15a2 of the battery unit 15a.

Furthermore, in FIGS. 3, 4A, and 4B of the embodiment, although the examples of performing the charge-and-discharge control relating to the SOC balancing are described at a timing when the deviations of the remaining electric charges Qrd with respect to a target value (the average Qav of the remaining electric charges Qrd according to the examples of FIG. 3, 4A, and 4B) are deviated from a predetermined range, the invention is not limited thereto. As shown in FIG. 5C of the embodiment, a configuration of performing the charge-and-discharge control relating to the SOC balancing at the times t5, t6, and t7 appropriately changeably set in advance may also be adopted. According to adopting the configurations thus described, even when a unique charge-and-discharge pattern without periodicity is adopted, it is possible to make use of the charge-and-discharge control relating to the SOC balancing.

Furthermore, with respect to the embodiment, the example of setting the average Qav of the remaining electric charges Qrd of the plurality of battery units 15a, 15b, ..., 15n as the target value of the SOC balancing, the invention is not limited thereto.

For example, as the target value of the SOC balancing, an embodiment of setting one of a maximum value and minimum value of the remaining electric charges Qrd of the plurality of battery units 15a, 15b, ..., 15n may also be adopted. As the target value of the SOC balancing, when an embodiment of setting the minimum value of the remaining electric charges Qrd of the plurality of battery units 15a, 15b, ..., 15n is adopted, the SOC balancing may be performed by mainly discharging the battery units 15a, 15b, ..., 15n. Furthermore, when an embodiment of setting the maximum value of the remaining electric charges Qrd of the plurality of battery units 15a, 15b, ..., 15n is adopted, the SOC balancing may be performed by mainly charging the battery units 15a, 15b, ..., 15n.

Furthermore, with respect to the embodiment, although the output value of the remaining electric charge calculation unit 23 is merely processed internally, a configuration of positively outputting the output value toward outside by display, a communication, and the like may also be adopted. When the configuration thus described is adopted, it is possible to know a progressing situation and completion situation of the SOC balancing by the control thus described; for example, when the SOC balancing by the control is not completed, a charge-and-discharge load is regulated, and a load current and a detour current is superimposed; thereby, it is possible to perform an operation such as preventing an overcurrent from flowing into the battery units 15.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A battery system (11) having a battery string (13) configured by connecting in series a plurality of battery units (15; 36, 37; 38, 39) configuring at least one of a battery cell (15) and a battery module, the system being **characterized by** comprising:
an SOC (state of charge) detection unit (19) configured to individually detect states of charge of the plurality of battery units (15; 36, 37; 38, 39); and
a charge-and-discharge control unit (27) configured to individually charge and discharge the plurality of battery units (15; 36, 37; 38, 39), based on a full charge capacity of each of the plurality of battery units (15; 36, 37; 38, 39) and each of the states of charge of the plurality of battery units (15; 36, 37; 38, 39) individually detected by the SOC detection unit (19),
upon the battery system (11) being in no load state, the charge-and-discharge control unit (27) individually charge and discharge the plurality of battery units (15) so that the states of charge of the plurality of battery units (15; 36, 37; 38, 39) are approximately equal with each other when the plurality of battery units(15; 36, 37; 38, 39) are in a discharge end state and so that a difference between the states of charge of the plurality of battery units (15; 36, 37; 38, 39) is relatively large when the plurality of battery units (15; 36, 37; 38, 39) are approximately in a full charge state.

2. The battery system (11) according to claim 1 being **characterized by** further comprising a remaining electric charge calculation unit (23) configured to individually calculate remaining electric charges (Qrd) of the plurality of battery units (15; 36, 37; 38, 39), based on the full charge capacity of the battery unit (15a, 15b,..., 15n; 36, 37; 38, 39) and the state of charge of the battery unit (15a, 15b,..., 15n; 36, 37; 38, 39),
wherein the charge-and-discharge control unit (27) individually charges and discharges the plurality of battery units (15; 36, 37; 38, 39), based on the remaining electric charges (Qrd) of the battery units (15; 36, 37; 38, 39) individually calculated by the remaining electric charge calculation unit (23).

3. The battery system (11) according to claim 1 or 2 being **characterized by** further comprising an over-and-short electric charge calculation unit (25) configured to individually calculate charges of an excess and shortage of the plurality of battery units (15; 36, 37; 38, 39) so that a difference of the remaining electric charges (Qrd) between the plurality of battery units (15; 36, 37; 38, 39) is approximately zero..

4. The battery system (11) according to any one of claims 1 to 3 being **characterized in that** a kind of the battery unit (15a, 15b,..., 15n; 36, 37; 38, 39) is a lithium-ion secondary battery.
